# EUROPEAN PATENT APPLICATION

(11) **EP 3 581 806 A1**
(43) Date of publication of application: **18.12.2019**
(21) Application number: 18793850.1
(22) Date of filing: 09.04.2018
(51) Int. Cl.: F15B 11/06, F15B 11/00, F15B 11/04

(54) **SPEED CONTROLLER**

(30) Priority: 02.05.2017 JP 2017091811
(71) Applicant: Yugen Kaisha Hama International, Okaya-shi, Nagano 394-0034 (JP)
(72) Inventor: HAMA, Tomio, Kamiina-gun, Nagano 399-4601 (JP); NISHIMAKI, Yutaka, Kamiina-gun, Nagano 399-4601 (JP)
(74) Representative: Mewburn Ellis LLP
(86) International application number: PCT/JP2018/014843
(87) International publication number: WO 2018/203460

(57) **Abstract**

To provide a speed controller capable of being applied to a cylinder with a short stroke with a simple structure. As a solution means, a speed controller (1) includes a first flow channel (15) and a second flow channel (16) allowing a first port (12) and a second port (14) to communicate with each other, into which pressure fluid is allowed to flow, in which a first valve (27) is arranged in the first flow channel (15), a second valve (28) is arranged in the second flow channel (16), a third flow channel (22) and a fourth flow channel (26) are further included, and a third valve (46) is arranged in the third flow channel (22), allowing only flowing from the first port (12) toward a portion on the piston shaft (34) side with respect to a piston (30) in a cylinder chamber (20) in the third flow channel as well as closing the first flow channel (15) and the fourth flow channel (26) by moving a third valve body (46a) in a direction of opening the third flow channel (22), and opening the first flow channel (15) and the fourth flow channel (26) by moving the third valve body (46a) in a direction of closing the third flow channel (22).

## Description

### Technical Field

The present invention relates to a speed controller, and more particularly relates to a speed controller connected to an external cylinder and capable of controlling operation speed of the cylinder in stages.

### Background Art

In an automation equipment line or the like performing assembly of machinery, electronic apparatuses and so on, an apparatus using a double-acting cylinder (hereinafter, referred to as merely a cylinder) is widely used. Though a cycle time can be shortened when the cylinder is speeded up, there is a problem that the impact at the time of stopping is increased and a lifetime of the cylinder is reduced. A demand of a cylinder belonging to a type with a short stroke is increased along with expansion of applications such as the automation equipment line.

A method of alleviating the impact at the time of stopping the cylinder has been commonly used, in which a shock absorber (for example, a hydraulic type) is provided at a mechanism part to which a piston of the cylinder is connected to prevent increase of the impact at the time of stopping even when the cylinder speed is increased. However, there are problems such that the mechanism becomes complicated and it is difficult to shorten the stroke as the shock absorber is provided in the above case. Furthermore, there is a problem that it is difficult to use the hydraulic-type shock absorber for food machinery as there is a danger of oil leakage due to a structure thereof.

In view of the above, the present inventors have proposed a speed controller capable of controlling operation speed in one stroke of an external cylinder in stages with a simple structure without using a shock absorber (refer to PTL 1: JP-A-2016-161055).

### Citation List

### Patent Literature

PTL 1: JP-A-2016-161055

### Summary of Invention

### Technical Problem

As the speed controller described in PTL 1 has a structure not having the shock absorber, a stroke of the cylinder can be shortened relatively. However, a market demand that the stroke of the cylinder is further shortened is increasing in these days.

In the speed controller described in PTL 1, flow channels through which pressure fluid is allowed to flow from a second port to a first port are opened at the timing when an electromagnetic valve is switched due to the structure thereof. Accordingly, a slight delay of time is generated in starting of flow-rate control in which the flow rate allowing the pressure fluid from the cylinder to flow from the second port to the first port is regulated with respect to the timing when the electromagnetic valve is switched and the pressure fluid from the cylinder is discharged from the first port. Accordingly, a stroke corresponding to the delay time in the flow-rate control is necessary.

That is, the well-known speed controller is capable of controlling operation speed in one stroke of the external cylinder in stages with a simple structure and is suitable for a cylinder with a long stroke in which the delay time in the flow-rate control does not matter, however, on the other hand, it is not suitable for a cylinder with a short stroke in which the delay time in the flow-rate control matters.

### Solution to Problem

The present invention has been accomplished in view of the above circumstances, and an object thereof is to provide a speed controller capable of controlling operation speed in one stroke of an external cylinder in stages with a simple structure without using a shock absorber and further, capable of being applied to a cylinder with a short stroke by eliminating the delay time in the flow-rate control.

The above problems are solved by solution means disclosed below as one embodiment.

A disclosed speed controller includes a first flow channel and a second flow channel allowing a first port and a second port respectively arranged in a body part to communicate with each other, into which pressure fluid is allowed to flow, in which a first valve is arranged in the first flow channel, regulating a flow rate of flowing pressure fluid by allowing a first valve body arranged on a side where a piston shaft fixed to a piston arranged so as to reciprocate in a cylinder chamber formed in the body part as well as protruding to the outside of the cylinder chamber protrudes to the outside of the cylinder to contact or be separated from a first opening hole formed in the body part, a second valve allowing only flowing from the first port toward the second port is arranged in the second flow channel, a third flow channel allowing the first port to communicate with a portion on a piston shaft side with respect to the piston in the cylinder chamber, into which pressure fluid is allowed to flow and a fourth flow channel allowing the portion on the piston shaft side with respect to the piston in the cylinder chamber to communicate with a discharge port formed in the body part, into which pressure fluid is allowed to flow are further included, and a third valve is arranged in the third flow channel, allowing only flowing from the first port toward the portion on the piston shaft side with respect to the piston in the cylinder chamber in the third flow channel as well as closing the first flow channel and the fourth flow channel by moving a third valve body in a direction of opening the third flow channel, and opening the first flow channel and the fourth flow channel by moving the third valve body in a direction of closing the third flow channel.

### Advantageous Effects of Invention

According to the disclosed speed controller, a speed controller capable of controlling operation speed in one stroke of the external cylinder in stages with a simple structure without using a shock absorber, and capable of being applied to a cylinder with a short stroke by eliminating the delay time in the above flow-rate control.

### Brief Description of Drawings

Fig. 1 is a schematic view showing an example of a speed controller according to an embodiment of the present invention and an operation explanatory view showing an initial state.
Fig. 2 is a schematic view of the speed controller according to the embodiment and an operation explanatory view showing a state in a middle of passing through a third flow channel.
Fig. 3 is a schematic view of the speed controller according to the embodiment and an operation explanatory view showing a state where a first flow channel, a second flow channel and the third flow channel are opened.
Fig. 4 is a schematic view of the speed controller according to the embodiment and an operation explanatory view for explaining a state where a fourth flow channel is opened while the third flow channel is closed.
Fig. 5 is a schematic view of the speed controller according to the embodiment and an operation explanatory view for explaining a state where a fifth flow channel is opened.
Fig. 6 is a schematic view of the speed controller according to the embodiment and an operation explanatory view for explaining a state where the first flow channel is opened.
Fig. 7 is a circuit diagram showing a case where speed controllers shown in Fig. 1 to Fig. 6 and an external cylinder are included.

### Description of Embodiments

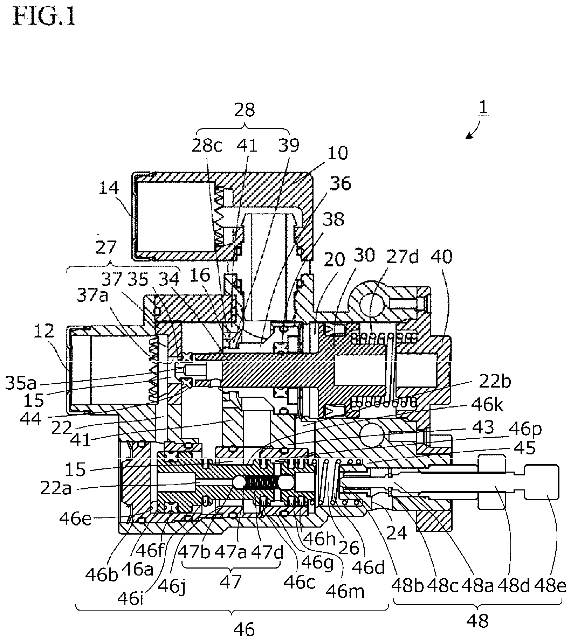

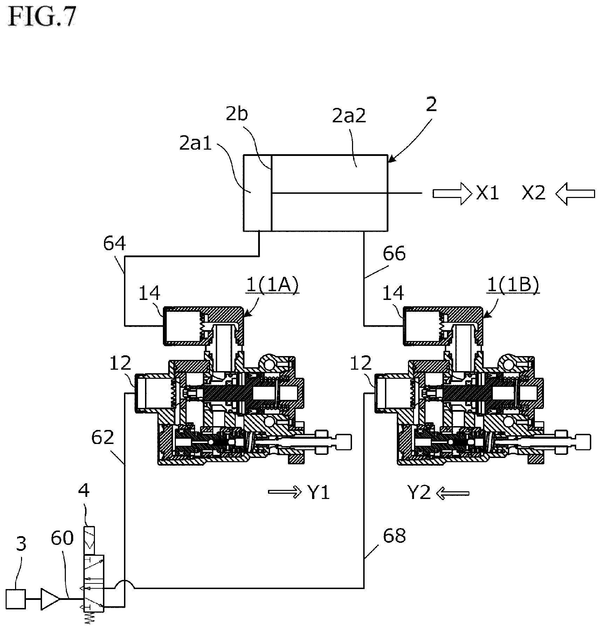

Hereinafter, an embodiment of the present invention will be explained in detail with reference to the drawings. Fig. 1 to Fig. 6 are plan cross-sectional views (schematic views) showing an example of a speed controller 1 according to the embodiment, which are operation explanatory views for explaining operation. Fig. 7 is a circuit diagram showing a case where the speed controller 1 (two speed controllers 1A, 1B in this case) shown in Fig. 1 to Fig. 6 and an external cylinder 2 are included. In all drawings for explaining the embodiment, the same symbols are added to members having the same function and repeated explanation may be omitted.

The speed controller 1 according to the embodiment is incorporated in (connected to) flow channels for allowing pressure fluid (for example, compressed air) to flow with respect to, for example, an external double-acting cylinder (hereinafter, referred to as merely a cylinder) 2 forming an automation equipment line and the like to control operation speed of the cylinder 2 in stages (for example, two stages of a high speed and a low speed).

As shown in Fig. 1 to Fig. 6, the speed controller 1 includes plural flow channels allowing pressure fluid to flow in a body part 10 (details are explained later). A cylinder chamber 20 in which a piston 30 is held so as to reciprocate is provided inside the body part 10.

As constituent materials for the speed controller 1, resin materials (for example, POM, PBT and so on) and metal materials (for example, stainless steel, brass and so on) are suitably used according to use conditions in portions other than portions where a rubber material is used such as in a later-described second valve body 39 and an annular packing 38.

Here, in the cylinder chamber 20, a housing 36 and a first wall part 43 sectioning the cylinder chamber 20 into the inside and the outside (portions to be a first flow channel 15 and a second flow channel 16 inside the body part 10 in this case) while maintaining airtightness are provided on one end side. A cap 40 and a second wall part 45 sectioning the cylinder chamber 20 into the inside and the outside (portions to be the outside of the body part 10 in this case) while maintaining airtightness are provided on the other end side. That is, the cylinder chamber 20 is configured to form an internal space by the body part 10, the housing 36, the first wall part 43, the second wall part 45 and the cap 40. The structure in which the body part 10, the housing 36, the first wall part 43, the second wall part 45 and the cap 40 are separately formed is adopted as an example, however, it is also adopt a structure in which some of the body part 10, the housing 36, the first wall part 43, the second wall part 45 and the cap 40 are integrally formed.

In the embodiment, a piston shaft 34 is fixed to the piston 30 arranged inside the cylinder chamber 20 so as to reciprocate, which can reciprocate in an axial direction together with the piston 30. The structure in which the piston shaft 34 and the piston 30 are integrally formed is adopted as an example, however, a structure in which they are separately formed may be adopted.

The piston shaft 34 is configured so that a tip end side of the piston shaft 34 is inserted into the housing 36 on one end side of the cylinder chamber 20 and protrudes to the outside of the cylinder chamber 20. The annular packing 38 made of rubber is provided at a sliding position in the housing 36 into which the piston shaft 34 is inserted, and the piston shaft 34 can move in the axial direction while maintaining airtightness with respect to the housing 36. Though the annular packing 38 is shown as an X-ring, an O-ring can be substituted for that.

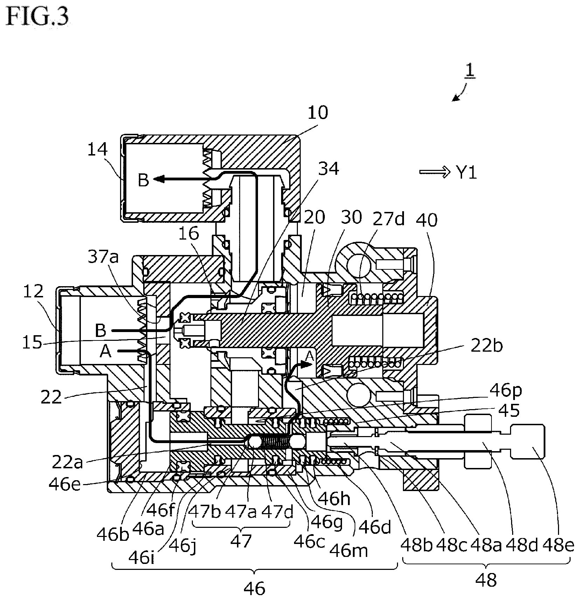

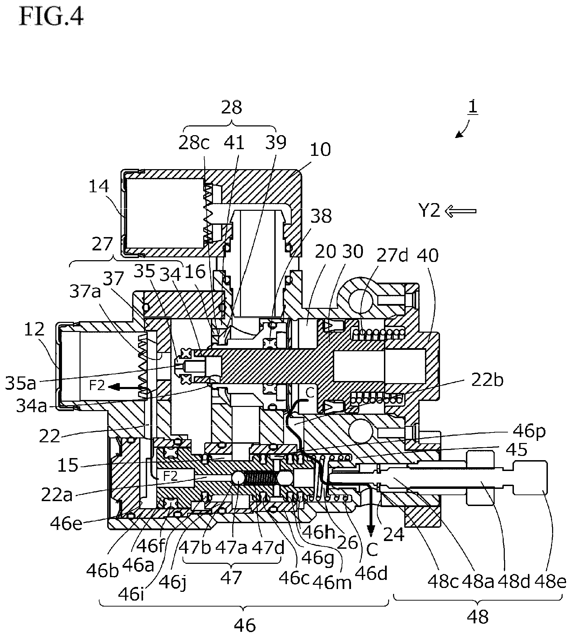

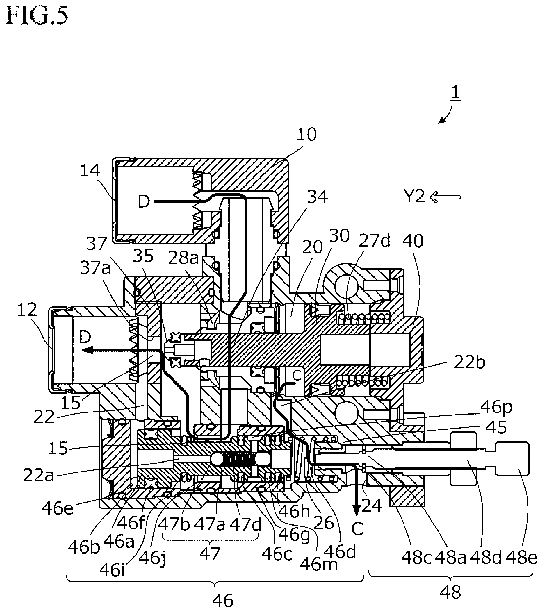

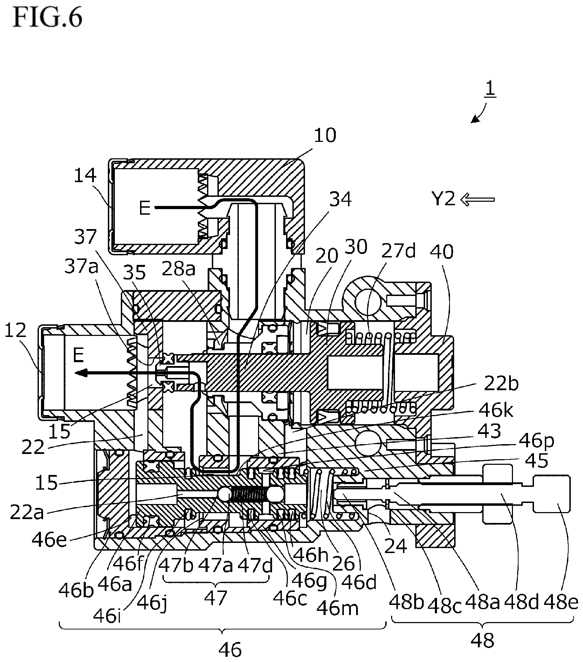

More specifically concerning the plural flow channels provided in the body part 10, the first flow channel 15 allowing pressure fluid to flow from a second port 14 to a first port 12 (flow channel shown by an arrow D in Fig. 5 or an arrow E in Fig. 6) is provided. The second flow channel 16 allowing pressure fluid to flow from the first port 12 to the second port 14 (flow channel shown by an arrow B in Fig. 3) is also provided. Then, a third flow channel 22 (flow channel shown by an arrow A in Fig. 3) allowing the first port 12 to communicate with a portion on the piston shaft 34 side with respect to the piston 30 in the cylinder chamber 20 formed inside the body part 10 to allow pressure fluid to flow is provided. Furthermore, a fourth flow channel 26 (flow channel shown by an arrow C in Fig. 4) allowing the portion on the piston shaft 34 side with respect to the piston 30 in the cylinder chamber 20 to communicate with a discharge port 24 provided in the body part 10 and allowing the pressure fluid to flow is provided.

First, arrangement and structures of plural valves provided in the speed controller 1 according to the embodiment will be explained.

In the embodiment, a first valve 27 is arranged close to the first port 12. A second valve 28 is arranged at a position with a given interval from the first valve 27. A tip end part of the housing 36 is fitted to a wall as a second valve seat 41 of the second valve 28, where the tip end side of the piston shaft 34 protrudes.

Here, the first flow channel 15 is configured so that an first opening hole 37a opening at a first valve seat 37 of the first valve 27 forms part of the flow channel. In the present embodiment, the first valve 27 functions as a regulating valve for regulating a flow rate of flowing pressure fluid by allowing a first valve body 35 arranged at a tip end of the piston shaft 34 to reciprocate to contact or be separated from the first opening hole 37a (details will be described later).

Next, the second valve 28 arranged at a position surrounding an outer periphery of the piston shaft 34 and allowing only the flow flowing from the first port 12 toward the second port 14 is provided in the second flow channel 16. The second valve 28 is configured to open and close the second flow channel 16. The second valve 28 includes the second valve body 39 and the second valve seat 41, having the action of allowing pressure fluid to pass through only in a direction shown by the arrow B in Fig. 3. That is, when the pressure fluid is allowed to flow from the first port 12 side into the second flow channel 16, the second valve body 39 is separated from the second valve seat 41 by the pressure of the pressure fluid and the flow channel is opened. On the other hand, when the pressure fluid is allowed to flow from the second port 14 side into the second flow channel 16, the second valve body 39 closely contacts the valve seat 41 by the pressure of the pressure fluid and the flow channel is closed. As an example, the second valve body 39 is formed of using rubber, and the second valve seat 41 is integrally formed with the body part 10 by using a resin material. That is, the second valve 28 functions as a check valve.

In the embodiment, a moving member is provided, which moves the piston 30 and the piston shaft 34 in a direction of reducing a capacity of the cylinder chamber 20 as well as in a direction of allowing the first valve body 35 arranged at the tip end of the piston shaft 34 to abut on or enter the first opening hole 37a (or both directions of this direction and the reverse direction).

As the moving member, a structure using a biasing member (for example, a mechanism of moving the piston 30 and the piston shaft 34 by a biasing force of the biasing member) or a motor (for example, a mechanism of moving the piston 30 and the piston shaft 34 by using a stepping motor driven by a controller or the like and a rack-and-pinion or a ball screw and so on) or the like is adopted.

As an example, the biasing member is used as the moving member in the embodiment. More specifically concerning the biasing member, a first biasing member (for example, a spring member such as a coil spring) 27d arranged so that one end abuts on the piston 30 and the other end abuts on the cap 40 is provided inside the cylinder chamber 20. The first biasing member 27d generates a biasing force of moving the piston 30 and the piston shaft 34 in the direction of reducing the capacity of the cylinder chamber 20 as well as in the direction of allowing the first valve body 35 arranged at the tip end of the piston shaft 34 to abut on or enter the first opening hole 37a. As a modification example of the first biasing member, a structure in which the pressure of pressure fluid (compressed air and the like) is applied to the other end side of the piston 30 to generate the similar biasing force may be adopted (not shown).

In the embodiment, an X-ring 44 fixed to an outer periphery of the first valve body 35 and holding airtightness between the first valve body 35 and the first opening hold 37a is provided. The X-ring 44 has a function as a stopper while being elastically deformed so that the first valve body 35 arranged at the tip end of the piston shaft 34 does not enter the first opening hole 37a beyond a prescribed position at the time of moving the piston 30 and the piston shaft 34 to the above direction by the moving member. An O-ring can be substituted for the X-ring 44. A structure of providing an adjustment member capable of prescribing a stop position of the piston 30 (namely, the stop position of the first valve body 35 arranged at the tip end of the piston shaft 34) and adjusting the stop position may be adopted (not shown). In the case where the motor (for example, the stepping motor) is used as the moving member, adjustment of the stop position of the piston 30 (and the piston shaft 34) is performed by motor control by the controller, therefore, the controller and the motor configure the adjustment member.

In the third flow channel 22, a third valve 46 is provided. The third valve 46 is configured so that a third valve body 46a arranged so as to reciprocate in a valve box 46e provided in the middle of the third flow channel 22 moves in a direction of opening the third flow channel 22 to thereby close the fourth flow channel 26 and the first flow channel 15 and moves in a direction of closing the third flow channel 22 to thereby open the fourth flow channel 26 and the first flow channel 15. The third valve 46 functions as a check valve (details will be described later).

In the embodiment, the third valve 46 includes the third valve body 46a configured to reciprocate inside the valve box 46e, a second biasing member (a coil spring as an example) 46d biasing the third valve body 46a to the back direction in the valve box 46e (direction of pushing the third valve body 46a to a third valve seat 46b) and an annular packing 46f fixed to the third valve body 46a and holding airtightness between the third valve body 46a and the valve box 46e. The annular packing 46f is shown by an X-ring here, however, an O-ring can be substituted for that.

In the third valve seat 46b, a first tube member 46j and a second tube member 46g are connected and fixed in a direction of the second biasing member 46d. The first tube member 46j is fixed to a wall as the second valve seat 41 to partition the inside of the body part 10. The second tube member 46g is fixed to the first wall part 43 to partition the inside of the body part 10. The third valve body 46a is configured to reciprocate in the valve box 46e, the first tube member 46j and the second tube member 46g. Then, an annular packing 46i is fixed to the third valve body 46a, which is arranged so as to hold airtightness between the third valve body 46a and the first tube member 46j. Moreover, annular packings 46c, 46m and 46h are fixed to the third valve body 46a at given intervals, which are arranged so as to hold airtightness between the third valve body 46a and the second tube member 46g. In this case, the annular packings 46i, 46c, 46m and 46h are arranged in the order closer to the annular packing 46f of the third valve body 46a (the side apart from the second biasing member 46d).

The third flow channel 22 is formed so that a middle part 22a of the flow channel passes through the inside of the third valve body 46a. Moreover, a fourth valve 47 is provided in the third valve body 46a, which allows only the flow flowing from the first port 12 toward the portion on the piston shaft 34 side with respect to the piston 30 in the cylinder chamber 20 in the middle part 22a of the third flow channel 22 formed thereinside.

The fourth valve 47 includes a fourth valve body 47a configured so as to move in the middle part 22a of the third flow channel 22a, a fourth valve seat 47b and a third biasing member 47d (a coil spring as an example) biasing the fourth valve body 47a to a direction of closely contacting the fourth valve seat 47b. The fourth valve 47 is arranged inside the third valve body 46a in the embodiment. According to the structure in which the fourth valve 47 is provided inside the third valve body 46a, size reduction in the entire apparatus and simplification of the mechanism can be realized. The fourth valve 47 functions as a check valve (details will be described later). A fifth opening hole 46p is formed on a side surface of the third valve body 46a at a position between the annular packing 46c and the annular packing 46m. The third flow channel 22 is formed so that the middle part 22a of the flow channel passes the fifth opening hole 46p.

Next, the fourth flow channel 26 is configured so that an area on a side where the second biasing member 46d is provided with respect to the third valve body 46a forms part of the flow channel in the valve box 46e as a space part in which the third valve body 46a reciprocates. Also in the fourth flow channel 26, a needle valve 48 regulating a flow rate of flowing pressure fluid is provided.

In the embodiment, the needle valve 48 has a structure in which an orifice 48c is fixed to a needle shaft 48a and the orifice 48c is moved with a tip end part 48b to change a substantial opening area of the discharge port 24, thereby regulating the flow rate. Here, a screw part 48d provided at a rear end part of the needle shaft 48a is screwed to the body part 10 so as to rotate, and the needle shaft 48a can be moved to the axial direction by rotating an adjusting knob 48e, therefore, the substantial opening area of the discharge port 24 can be adjusted by changing the position of the orifice 48c with respect to the discharge port 24. The position and shape of the orifice 48c provided in the middle of the flow channel of the fourth flow channel 26 are suitably set and not particularly limited.

In this case, a portion connecting the second tube member 46g in the third flow channel 22 to the portion on the piston shaft 34 side with respect to the piston 30 in the cylinder chamber 20 is used as a flow channel used in common with the fourth flow channel 26. However, the present invention is not limited to the structure and a structure in which a dedicated flow channel for the fourth flow channel 26 is provided may be adopted (not shown).

The first flow channel 15 is formed so as to pass through an outer peripheral part of the third valve body 46a in the embodiment. A constricted part 46k is arranged in an outer periphery of the third valve body 46a and the first tube member 46j is arranged in an outer periphery of the constricted part 46k. The annular packing 46i is fixed to the third valve body 46a at a position between the third valve seat 46b and the first tube member 46j. Here, the constricted part 46k is an example, and a groove shape or the like may be adopted (not shown).

Next, operation of the speed controller 1 having the above structure will be explained.

As a typical example, a case where a piston 2b in the cylinder 2 is moved in an arrow X1 direction in Fig. 7 in a structure including two speed controllers 1 (1A, 1B) for driving the external cylinder (double-acting cylinder in this case) 2 will be explained.

Pressure fluid (compressed air as an example) is supplied from an external pressure fluid supply source 3, which is supplied to the first port 12 of the speed controller 1 (1A) through a flow channel 60, an electromagnetic valve 4 and a flow channel 62. The action of the electromagnetic valve 4 will be described later.

First, operation and action of the speed controller 1 (1A) in this case will be explained.

In an initial state (state where pressure fluid is not supplied), plural valves are closed in the speed controller 1 (1A) as shown in Fig. 1. Specifically, the first valve 27 is closed by the biasing force of the first biasing member 27d. The third valve body 46a is pushed into the third valve seat 46b by the biasing force of the second biasing member 46d. Then, the fourth valve body 47a closely contacts the fourth valve seat 47b by the biasing force of the third biasing member 47d.

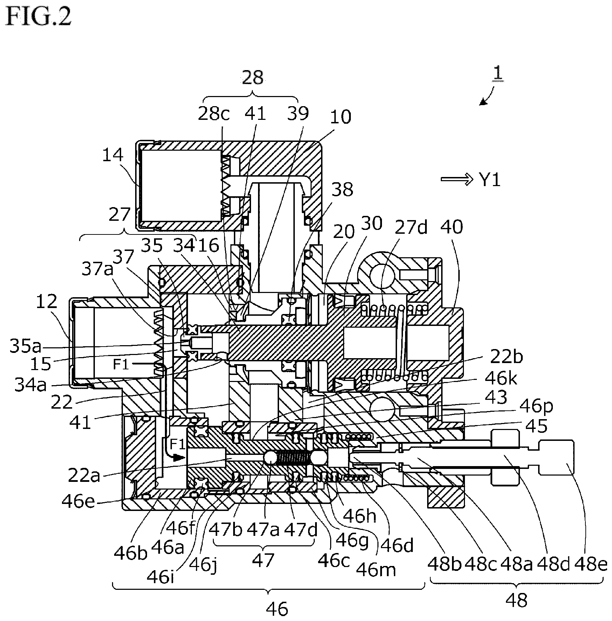

When pressure fluid is supplied to the first port 12 of the speed controller 1 (1A) in the initial state, the supplied pressure fluid separates the third valve body 46a from the third valve seat 46b against the biasing force of the second biasing member 46d first as shown by an arrow F1 in Fig. 2. Then, the fourth valve body 47a is separated from the fourth valve seat 47b against the biasing force of the third biasing member 47d as shown in Fig. 3. When the fourth valve body 47a is separated from the fourth valve seat 47b, the third flow channel 22 is opened, which allows the first port 12 to communicate with the portion on the piston shaft 34 side with respect to the piston 30 in the cylinder chamber 20 formed indie the body part 10 to allow the pressure fluid to flow as shown by an arrow A in Fig. 3.

Then, when the third flow channel 22 is opened, the pressure fluid is stored inside the cylinder chamber 20 of the speed controller 1 (1A) and the piston 30 moves to a prescribed position in a Y1 direction. The piston 30 moves in the Y1 direction against the biasing force of the first biasing member 27d and the piston shaft 34 fixed to the piston 30 moves to separate the first valve body 35 arranged at the tip end of the piston shaft 34 from the first opening hole 37a formed in the first valve seat 37. When the first opening hole 37a is opened, the second valve body 39 is separated from the second valve seat 41 due to pressure of the pressure fluid to open the second flow channel 16. When the second flow channel 16 is opened, the pressure fluid flows from the first port 12 to the second port 14 as shown by the arrow B in Fig. 3.

Next, the action of the speed controller 1 (1B) in this case will be explained.

When the piston 2b is driven to an X1 direction by the above operation, the pressure fluid fed from the cylinder 2 is supplied to the second port 14 of the speed controller 1 (1B) through a flow channel 66. Here, a flow velocity (namely, a flow rate) of the pressure fluid flowing from the flow channel 66 to the second port 14 and fed from the first port 12 to a flow channel 68 is regulated by the speed controller 1 (1B), thereby regulating (controlling) operation speed (axial direction moving speed) of the piston 2b of the cylinder 2. That is, when the flow velocity of the pressure fluid passing through the speed controller 1 (1B) (more specifically, inside the second flow channel 16) is high (namely, a flow rate per unit time is high), the operation speed (axial direction moving speed) of the piston 2b of the cylinder 2 becomes high. On the other hand, when the flow velocity of the pressure fluid is low (namely, the flow rage per unit time is low), the operation speed (axial direction moving speed) of the piston 2b of the cylinder 2 becomes low.

The pressure fluid supplied to the second port 14 of the speed controller 1 (1B) flows to the first port 12 through the first valve 27 as described later. The pressure fluid fed from the first port 12 is fed to the air through the flow channel 68 and the electromagnetic valve 4.

Here, at the time when the piston 2b of the cylinder 2 starts to move in the X1 direction, the pressure fluid is stored inside the cylinder 20 of the speed controller 1 (1B) and the piston 30 is moved to a prescribed position in the Y1 direction as a normal setting. (The action of being stored is the same as in the case of the above-described speed controller 1 (1A)). At this time, the speed controller 1B separates the third valve body 46a from the third valve seat 46b against the biasing force of the second biasing member 46d as shown in Fig. 4. Then, the fourth valve body 47a closely contacts the fourth valve seat 47b by the biasing force of the third biasing member 47d, therefore, the middle part 22a of the third flow channel is closed. Moreover, the annular packing 46h closely contacts the second wall part 45 at this time, the third flow channel 26 is closed.

When the piston 2b of the cylinder 2 starts to move in the X1 direction, the pressure fluid stored in the valve box 46e is discharged from the first port 12 as shown by an arrow F2 in Fig. 4, and the third valve body 46a starts to move in a direction of being pushed into the third valve seat 46b by the biasing force of the second biasing member 46d. When the third valve body 46a moves to the direction of being pushed into the third valve seat 46b, the annular packing 46m closely contacts the second tube member 46g, therefore, the middle part 22a of the third flow channel is closed. As the annular packing 46h is separated from the second wall part 45 at this time, the fourth flow channel 26 is opened. The annular packing 46i closely contacts the first tube member 46j at this time, therefore, the first flow channel 15 is closed.

That is, when the piston 2b of the cylinder 2 starts to move in the X1 direction, the first flow channel 15 is closed, the second flow channel 16 is closed, the third flow channel 22 is closed and only the fourth flow channel 26 is opened. That is, flow-rate control performing regulation of the flow rate at which pressure fluid from the cylinder 2 is allowed to flow from the second port 14 to the first port 12 is started at the time when the electromagnetic valve 4 is switched and the pressure fluid from the cylinder 2 is discharged from the first port 12 according to the embodiment. Accordingly, the delay time in flow-rate control occurring in related art can be eliminated, therefore, the speed controller 1 suitable for the cylinder with a short stroke can be obtained.

When the first flow channel 15 is closed and the fourth flow channel 26 is opened, the pressure fluid stored inside the valve box 46e is started to be discharged from the first port 12 as shown in Fig. 4, the biasing force of the first biasing member 27d becomes higher than the pressure due to reduction of the pressure fluid stored in the portion on the piston shaft 34 side with respect to the piston 30 in the cylinder chamber 20, and the piston 30 starts to move in a Y2 direction by the biasing force. Then, the pressure fluid stored in the cylinder chamber 20 of the speed controller 1 (1B) flows in the fourth flow channel 26 as shown by the arrow C from the portion on the piston shaft 34 side with respect to the piston 30 inside the cylinder chamber 20 to the discharge port 24 through the valve box 46e and the needle valve 48, then, discharged (fed out) to the outside of the body part 10.

Then, the third valve body 46a moves in the direction of being pushed into the third valve seat 46b by the biasing force of the second biasing force member 46d as shown in Fig. 5 and the annular packing 46i is separated from the first tube member 46j to open the first flow channel 15. Therefore, the action of allowing the pressure fluid to flow in a direction shown by the arrow D in Fig. 5 is given. Then, the pressure fluid is allowed to flow from the second port 14 to the first port 12. At this time, a flow velocity of the pressure fluid passing through the first valve 27, namely, the inside of the first flow channel 15 is relatively high (namely, a flow rate per a unit time is high). That is, operation speed (axial direction moving speed) of the piston 2b of the cylinder 2 becomes high.

Here, the flow velocity of the pressure fluid flowing from the inside of the cylinder chamber 20 to the discharge port 24 (namely, the flow rate per a unit time) is regulated by the needle valve 48, thereby regulating (controlling) operation speed (axial direction moving speed) of the piston 30 and the piston shaft 34 fixed thereto in the Y2 direction. That is, when the flow velocity of the pressure fluid passing inside the fourth flow channel 26 is high (namely, the flow rate per a unit time is high), operation speed (axial direction moving speed) of the piston 30 and the piston shaft 34 becomes high. On the other hand, when flow velocity of the pressure fluid is low (namely, the flow rate per a unit time is low), operation speed (axial direction moving speed) of the piston 30 and the piston shaft 34 becomes low.

After that, when the piston 30 moves to a prescribed position in the Y2 direction as shown in Fig. 6, the first valve body 35 arranged at the tip end of the piston shaft 34 fixed to the piston 30 abuts on the first opening hole 37a formed in the first valve seat 37. At this time, a regulating action as the first valve 27, namely, a throttling action of a passing flow rate is generated. More specifically, the flow channel is formed so as to pass a third opening hole 35a at a tip end of the first valve body 35 from a fourth opening hole 34a on a side surface of the piston shaft 34, therefore, the pressure fluid flows to the first port 12 as shown by the arrow E in Fig. 6. As the third opening hole 35a at the tip end of the first valve body 35 has a smaller opening area than the first opening hole 37a formed in the first valve seat 37, the flow velocity of the pressure fluid passing inside the first flow channel 15 becomes relatively low (namely, the flow rate per a unit time is low). That is, operation speed (axial direction moving speed) of the piston 2b of the cylinder 2 becomes low (switched from high-speed to low-speed). As described above, the operation speed of the cylinder 2 can be regulated (controlled) in stages (two stages of high-speed and low-speed in this case). The prescribed position (stop position) of the piston 30 in the Y2 direction is prescribed by the X-ring 44 as described above.

As described above, the flow velocity (flow rate) of the pressure fluid passing inside the fourth flow channel 26 can be regulated by regulating the opening area, namely, the flow velocity (flow rate) of flowing pressure fluid in the needle valve 48. Accordingly, operation speed (axial direction moving speed) of the piston 30 in the Y2 direction in the body part 10 can be regulated. Therefore, the timing when the throttling action of the passing flow rate is started to occur in the first valve 27 can be adjusted. That is, the timing when operation speed (axial direction moving speed) of the piston 2b of the cylinder 2 is switched from high-speed movement to low-speed movement can be adjusted to be advanced or delayed.

Subsequently, a case where the piston 2b of the cylinder 2 is moved to an arrow X2 direction as the opposite direction to the arrow X1 direction in Fig. 7 will be briefly explained.

In order to move the piston 2b in the arrow X2 direction, the pressure fluid is supplied to the speed controller 1 (1B) which is reverse to the above example by activating the electromagnetic valve 4 and switching the circuit. More specifically, pressure fluid (compressed air as an example) may be supplied to the first port 12 of the speed controller 1 (1B) from the external pressure fluid supply source 3 through the flow channel 60, the electromagnetic valve 4 and the flow channel 68.

The pressure fluid supplied to the first port 12 of the speed controller 1 (1B) flows inside the first flow channel 15 and the second flow channel 16 to flow into the second port 14. Furthermore, the pressure fluid is supplied to the cylinder chamber of the external cylinder 2 through the flow channel 66, and the piston 2b is driven to the X2 direction.

The detailed action and effect are the same as the above case where the pressure fluid is supplied to the speed controller 1 (1A), therefore, repeated explanation is omitted.

As described above, when the pressure fluid is supplied from the external pressure fluid supply source 3 to the first port 12 of the speed controller 1 (1A) by switching the circuit of the electromagnetic valve 4, the piston 2b of the cylinder 2 can be moved in the arrow X1 direction. When the pressure fluid is supplied from the external pressure fluid supply source 3 to the first port 12 of the speed controller 1 (1B), the piston 2b of the cylinder 2 can be moved in the arrow X2 direction. Accordingly, the double-acting cylinder can be driven to reciprocate.

The present invention is not limited to the above explained embodiment, and various alterations may occur in a scope not departing from the present invention.

For example, a structure in which the first valve is configured by a needle valve and a flow velocity (flow rate) of pressure fluid passing inside the first flow channel 15 is regulated by an adjustable stopper or other structures may be adopted.

The constricted part formed so as to pass through part of the outer periphery of the third valve body to form part of the first flow channel is not limited to the shape of rotational symmetry, and a groove shape and so on may be adopted (not shown).

## Claims

1. A speed controller comprising:
a first flow channel and a second flow channel allowing a first port and a second port respectively arranged in a body part to communicate with each other, into which pressure fluid is allowed to flow,
wherein a first valve is arranged in the first flow channel, regulating a flow rate of flowing pressure fluid by allowing a first valve body arranged on a side where a piston shaft fixed to a piston arranged so as to reciprocate in a cylinder chamber formed in the body part as well as protruding to the outside of the cylinder chamber protrudes to the outside of the cylinder chamber to contact or be separated from a first opening hole formed in the body part,
a second valve allowing only flowing from the first port toward the second port is arranged in the second flow channel,
a third flow channel allowing the first port to communicate with a portion on a piston shaft side with respect to the piston in the cylinder chamber, into which pressure fluid is allowed to flow and a fourth flow channel allowing the portion on the piston shaft side with respect to the piston in the cylinder chamber to communicate with a discharge port formed in the body part, into which pressure fluid is allowed to flow are further included, and
a third valve is arranged in the third flow channel, allowing only flowing from the first port toward the portion on the piston shaft side with respect to the piston in the cylinder chamber in the third flow channel as well as closing the first flow channel and the fourth flow channel by moving a third valve body in a direction of opening the third flow channel, and opening the first flow channel and the fourth flow channel by moving the third valve body in a direction of closing the third flow channel.

2. The speed controller according to claim 1, wherein the third flow channel is formed so that a middle part of the flow channel passes the inside of the third valve body, and
a fourth valve is arranged in the third valve body, allowing only flowing from the first port toward the portion on the piston shaft side with respect to the piston in the cylinder chamber in the third flow channel formed thereinside.

3. The speed controller according to claim 1 or 2, wherein plural packings for closing the first flow channel and the fourth channel at middle parts of respective flow channels are arranged in the third valve body.

4. The speed controller according to any one of claims 1 to 3, wherein a third opening hole allowing a second opening hole formed in the first valve body to communicate with the third valve, into which pressure fluid is allowed to flow is formed on the side where the piston shaft protrudes to the outside of the cylinder chamber.
